# EUROPEAN PATENT APPLICATION

(11) **EP 4 176 744 A1**
(43) Date of publication of application: **10.05.2023**
(21) Application number: 21832477.0
(22) Date of filing: 02.07.2021
(51) Int. Cl.: A24F 40/57, A24F 40/51, G01K 7/22, G01K 7/16, A24F 40/46, H05B 3/00, A24F 40/40, A24F 47/00

(54) **AEROSOL GENERATING DEVICE AND INFRARED EMITTER**

(30) Priority: 03.07.2020 CN 202021283296 U
(71) Applicant: Shenzhen First Union Technology Co., Ltd., Shenzhen, Guangdong 518000 (CN)
(72) Inventor: HUANG, Linjian, Shenzhen, Guangdong 518000 (CN); WU, Jian, Shenzhen, Guangdong 518000 (CN); XU, Zhongli, Shenzhen, Guangdong 518000 (CN); LI, Yonghai, Shenzhen, Guangdong 518000 (CN)
(74) Representative: Proi World Intellectual Property GmbH
(86) International application number: PCT/CN2021/104334
(87) International publication number: WO 2022/002267

(57) **Abstract**

This application provides an aerosol generation device and an infrared emitter. The aerosol generation device includes a housing, where the housing is internally provided with: a cavity, configured to receive an inhalable material; an infrared emitter, including an infrared emission material, where the infrared emission material is configured to heat the inhalable material by radiating an infrared ray; a temperature sensing material, formed on the infrared emitter and insulated from the infrared emission material, where the temperature sensing material has a positive or negative resistance-temperature coefficient; and a circuit, configured to obtain a resistance value of the temperature sensing material and determine a temperature of the infrared emitter from the resistance value. According to the aerosol generation device, the temperature of the infrared emitter can be determined by printing or depositing a temperature sensing material with a temperature sensor function on the infrared emitter itself and detecting the resistance of the temperature sensing material, which has a more stable combination property and causes a more accurate result compared with a case of using a temperature measurement manner of attaching thermocouples.

## Description

### CROSS-REFERENCE TO RELATED APPLICATIONS

This application claims priority to Chinese Patent Application No. 202021283296.X, filed with the China National Intellectual Property Administration on July 3, 2020 and entitled "AEROSOL GENERATION DEVICE AND INFRARED EMITTER", which is incorporated herein by reference in its entirety.

### TECHNICAL FIELD

Embodiments of this application relate to the field of heat not burning e-cigarette device technologies, and in particular, to an aerosol generation device and an infrared emitter.

### BACKGROUND

Tobacco products (for example, cigarettes and cigars) burn tobacco during use to produce tobacco smoke. Attempts are made to replace these tobacco-burning products by manufacturing products that release compounds without combustion.

An example of such a product is a heating device that releases a compound by heating rather than burning a material. For example, the material may be tobacco or other non-tobacco products, where the non-tobacco products may or may not include nicotine. As an example of a known heating device, the tobacco product is heated by using an infrared emitter that can radiate an infrared ray to the tobacco product, and the temperature of the infrared emitter is measured by a temperature sensor during heating, so as to indirectly obtain a temperature of the heated tobacco product during heating, thereby controlling the heating process. As a known prior art, there is an error or change lag between a temperature result of the infrared emitter measured by the temperature sensor and a temperature at which the tobacco product is heated during an actual inhalation, which affects an accurate smoke emission control during the inhalation.

### SUMMARY

In order to resolve a temperature monitoring error in the prior art, embodiments of this application provide an aerosol generation device and an infrared emitter with more accurate temperature monitoring.

This application provides an aerosol generation device, configured to heat an inhalable material to generate an aerosol for inhalation, including: a housing, where the housing is internally provided with:
a cavity, configured to receive an inhalable material;
an infrared emitter, including an infrared emission material, where the infrared emission material is configured to radiate an infrared ray to the inhalable material received in the cavity, so as to heat the inhalable material;
a temperature sensing material, formed on the infrared emitter and insulated from the infrared emission material, where the temperature sensing material has a positive or negative resistance-temperature coefficient; and
a circuit, configured to obtain a resistance value of the temperature sensing material and determine a temperature of the infrared emitter from the resistance value.

In a preferred implementation, the temperature sensing material includes a conductive trajectory or a thermistor coating formed on the infrared emitter.

In a preferred implementation, the infrared emitter is configured to extend along an axial direction of the cavity and surround at least a part of the cavity.

In a preferred implementation, the infrared emitter further includes:
a base body, extending along the axial direction of the cavity and surrounding the cavity; and
the infrared emission material is configured as a coating formed on the base body or a film wrapped or wound on the tubular base body.

In a preferred implementation, at least a part of a length of the temperature sensing material extending along the axial direction of the cavity covers a length of the infrared emission material extending along the axial direction of the cavity.

In a preferred implementation, the infrared emitter is configured in a shape of pin extending along an axial direction of the cavity, and is inserted into the inhalable material when the inhalable material is received in the cavity.

In a preferred implementation, the infrared emitter includes:
a base body, configured to be in a pin shape at least a part of which extends along the axial direction of the cavity, where the base body is provided with a hollow extending along the axial direction inside; and
a substrate, accommodated in the hollow; and
the infrared emission material is configured to be a coating formed on a surface of the substrate or a film wrapped on the substrate.

In a preferred implementation, the temperature sensing material is formed on a surface of the base body.

In a preferred implementation, the conductive trajectory is configured in a winding, bending, or spiral shape extending along a length direction of the infrared emitter.

In a preferred implementation, the infrared emitter includes:
an electrothermal layer, including a first side and a second side facing away from each other along a thickness direction;
the infrared emission material is positioned on the first side of the electrothermal layer and configured to radiate an infrared ray to the inhalable material received by the cavity when heated by the electrothermal layer; and
the thermistor coating is positioned on the second side of the electrothermal layer.

In a preferred implementation, the infrared emitter further includes:
a first electrode layer, positioned on a first side of the electrothermal layer and electrically conductive with the electrothermal layer;
a second electrode layer, positioned between the electrothermal layer and the thermistor coating and electrically conductive with both the electrothermal layer and the thermistor coating; and
a third electrode layer, positioned on a side of the thermistor coating away from the electrothermal layer and electrically conductive with the thermistor coating.

In a preferred implementation, the first electrode layer and the second electrode layer are staggered from each other along a thickness direction of the electrothermal layer.

This application further provides an infrared emitter for an aerosol generation device, including:
an infrared emission material, configured to radiate an infrared ray to an inhalable material to heat the inhalable material; and
a temperature sensing material, insulated from the infrared emission material and having a positive or negative resistance-temperature coefficient, so that a temperature of the infrared emitter is capable of being determined from a resistance value of the conductive trajectory or thermistor coating by measuring the resistance value.

According to the aerosol generation device, the temperature of the infrared emitter can be determined by printing or depositing a temperature sensing material with a temperature sensor function on the infrared emitter itself and detecting the resistance of the temperature sensing material, which has a more stable combination property and causes a more accurate result compared with a case of using a temperature measurement manner of attaching thermocouples.

### BRIEF DESCRIPTION OF THE DRAWINGS

One or more embodiments are exemplarily described with reference to the corresponding figures in the accompanying drawings, and the descriptions are not to be construed as limiting the embodiments. Components in the accompanying drawings that have same reference numerals are represented as similar components, and unless otherwise particularly stated, the figures in the accompanying drawings are not drawn to scale.
FIG. 1 is a schematic structural diagram of an aerosol generation device according to an embodiment;
FIG. 2 is a schematic structural diagram of the aerosol generation device in FIG. 1 from another viewing angle;
FIG. 3 is a schematic cross-sectional view of the aerosol generation device in FIG. 1 along a width direction;
FIG. 4 is a schematic structural diagram of an embodiment of the infrared emitter in FIG. 3;
FIG. 5 is a schematic structural of another embodiment of the infrared emitter in FIG. 3;
FIG. 6 is a schematic structural diagram of an aerosol generation device according to another embodiment;
FIG. 7 is a schematic structural diagram of an embodiment of the infrared emitter in FIG. 6;
FIG. 8 is a schematic structural diagram of an aerosol generation device according to another embodiment;
FIG. 9 is a schematic structural diagram of an infrared emitter according to another embodiment; and
FIG. 10 is a schematic structural diagram of a part of circuit of an aerosol generation device according to an embodiment.

### DETAILED DESCRIPTION

For ease of understanding of this application, this application is described below in more detail with reference to accompanying drawings and specific implementations.

An embodiment of this application provides an aerosol generation device that heats but not burns an inhalable material, such as a cigarette, so as to volatilize or release at least one of inhalable materials to form an aerosol for inhalation.

Based on a preferred implementation, the heating on the inhalable material by the aerosol generation device is performed by irradiating a far-infrared ray having a heating effect, for example, a far-infrared ray of 3 µm to 15 µm. During use, when the wavelength of the infrared ray matches the absorption wavelength of a volatile component of the inhalable material, the energy of the infrared ray is easily absorbed by the inhalable material, and the inhalable material is heated to volatilize at least one volatile component to generate an aerosol for inhalation.

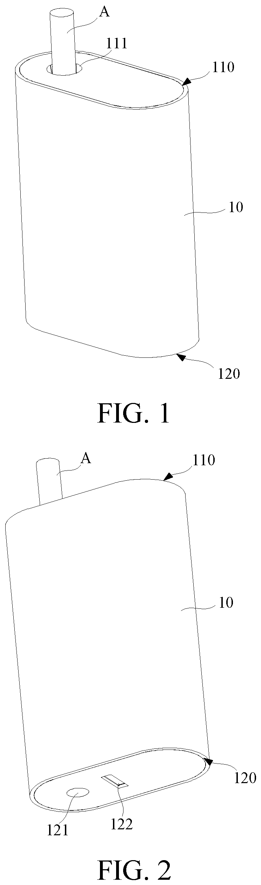

A configuration of the aerosol generation device according to an embodiment of this application may be shown in FIG. 1 and FIG. 2. The overall shape of the device is generally configured into a flat cylinder shape, and an external member of the aerosol generation device includes:
a housing 10, having a hollow structure inside, so as to form an assembling space for necessary functional components such as infrared radiation. The housing 10 has a near-end 110 and a far-end 120 opposite to each other along a length direction.

The near-end 110 is provided with a receiving hole 111, and an inhalable material A may be received in the housing 10 through the receiving hole 111 and heated or removed from the housing 10.

The far-end 120 is provided with an air inlet hole 121 and a charging interface 122. The air inlet hole 121 is configured to allow external air to enter the housing 10 during inhalation; and the charging interface 122, such as a USB type-C interface or a pin interface, is used for charging the aerosol generation device after being connected to an external power source or an adapter.

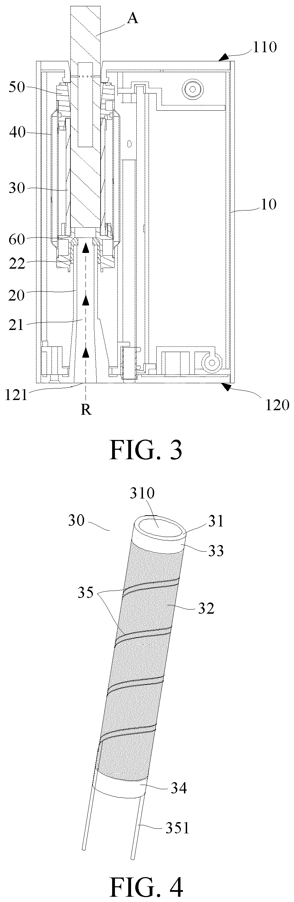

Further, the configuration of the interior of the housing 10 is shown in FIG. 3, an infrared emitter 30 is disposed along the length direction of the housing 10, and a three-dimensional configuration thereof may be shown in FIG. 4. The infrared emitter 30 includes:
a tubular base body 31, which is used as a rigid carrier and an object accommodating the inhalable material A. In the implementation, the tubular base body 31 may be made of a material that is high-temperature-resistant and can emit an infrared ray, such as quartz glass, ceramic, or mica. Preferably, the tubular base body 31 is made of a transparent material, such as a high-temperature-resistant material with an infrared transmittance of 95% or more. An inner space of the tubular base body 31 forms a cavity 310 for accommodating and heating the inhalable material A.

An infrared emission coating 32 formed on at least a part of an outer surface of the tubular base body 31, the infrared emission coating 32 is an electrically powered infrared emission coating, and may be capable of heating itself and radiating the infrared ray, such as the foregoing far-infrared ray of 3 µm to 15 µm, which can be used to heat the inhalable material A to the inhalable material received in the cavity 310 under the condition of being electrified. When a wavelength of the infrared ray matches an absorption wavelength of a volatile component of the inhalable material A, an energy of the infrared ray is easily absorbed by the inhalable material A.

Typically, in an implementation, the infrared emission coating 32 may be a coating prepared by ceramic materials such as zirconium, Fe-Mn-Cu-based materials, tungsten-based materials, or materials of transition metals and oxides thereof.

In a preferred implementation, the infrared emission coating 32 is preferably formed by an oxide or nitride of at least one metal element including Mg, Al, Ti, Zr, Mn, Fe, Co, Ni, Cu, and Cr, For example, the infrared emission coating 32 includes but not limited to the following materials: oxides (Fe₂O₃, Al₂O₃, Cr₂O₃, In₂O₃, La₂O₃, Co₂O₃, Ni₂O₃, Sb₂O₃, Sb₂O₅, TiO₂, ZrO₂, MnO₂, CeO₂, CuO, ZnO, MgO, CaO, MoO₃, etc.), carbides (for example, SiC), nitrides (for example, TiN, CrN, AlN, and Si₃N₄), or a combination of two or more of the above materials. When heated to an appropriate temperature, the materials radiate a far-infrared ray having a heating effect. The thickness can be preferably controlled from 30 µm to 50 µm. A manner of forming the infrared emission coating 32 on the surface of the base body 31 may be that the foregoing oxides of the metal element are sprayed on an outer surface of the base body 31 through atmospheric plasma spraying, and then are cured, to obtain the infrared emission coating 32.

In other variation implementations, the infrared emission coating 32 may further be formed on an inner surface of the base body 31.

The infrared emitter 30 further includes a first conductive coating 33 and a second conductive coating 34 respectively formed on at least a part of outer surfaces of opposite ends of the infrared emission coating 32. According to a preferred implementation shown in FIG. 4, the first conductive coating 33 and the second conductive coating 34 are both annular in shape and in contact with the infrared emission coating 32, and can be respectively electrically connected to a positive electrode and a negative electrode of a power source during use, so that the infrared emission coating 32 electrically generates heat and radiates the infrared ray. The first conductive coating 33 and the second conductive coating 34 may be conductive coatings formed by impregnation, coating, or the like, and may generally include silver, gold, palladium, platinum, copper, nickel, molybdenum, tungsten, niobium, or metal or alloy thereof.

Further, referring to FIG. 3, a heating mechanism further includes an insulator 40 located outside the infrared emitter 30 along a radial direction, where the insulator 40 is tubular in shape. The insulator 40 adopted in FIG. 3 is a vacuum insulator tube, specifically including two layers of tube walls from inside to outside along the radial direction, and a central region with a certain degree of vacuum in the center. The tube walls of the insulator 40 may be prepared by a rigid material such as stainless steel, ceramic, or PPEK, so as to reduce radial outward conduction of heat generated by the infrared emitter 30 during operation.

Further, referring to an embodiment shown in FIG. 3, the housing 10 is further provided with a tubular element 20 located along a length direction in the heating mechanism and in front of an air inlet hole 122, the tubular element 20 is configured to implement airflow communication between the cavity 310 and the air inlet hole 122 during inhalation. Referring to an arrow R in FIG. 3, during the inhalation, external air enters the housing 10 through the air inlet hole 122 and enters the cavity 310 through the interior hollow 21 of the tubular element 20, and then is inhaled by the user through the inhalable material A.

Further, referring to FIG. 3, in order to ensure a stable fixation of the infrared emitter 30 and the insulator 40 in the housing 10 and to provide support for the inhalable material A, the inhalable material A is fixedly maintained in the cavity 32. The housing 10 is further provided with an upper fixed seat 50 and a lower fixed seat 60 inside, and the upper fixed seat 50 and the lower fixed seat 60 are both substantially designed in a hollow annular shape. The upper fixed seat 50 and the lower fixed seat 60 respectively provide support to the infrared emitter 30 and the insulator 40 at the upper and lower ends, so that the infrared emitter 30 and the insulator 40 can be stably maintained in the housing 10.

Further, referring to FIG. 4, a conductive trajectory 35 for sensing the temperature of the infrared emitter 30 is formed on an outer surface of the infrared emitter 30 by printing or depositing. Specifically, the conductive trajectory 35 is prepared by a material with a positive or negative resistance-temperature coefficient, such as platinum, tungsten, iron-chromium-aluminum alloy, and the like. In this way, when the infrared emitter 30 generates heat and receives and accommodates heat transferred through the inhalable material A to produce a temperature change, the resistance of the conductive trajectory 35 has a positive or negative correlation with temperature, and thereby a resistance value of the conductive trajectory 35 can be detected by pins 351 at both ends of the conductive trajectory 35, and then the temperature of the infrared emitter 30 can be determined by the resistance value.

By using the foregoing infrared emitter 30 and by printing or depositing the conductive trajectory 35 capable of sensing the temperature of the infrared emitter 30 to make the infrared emitter 30 integrated with a temperature sensor function, the combination property is more stable and the result is more accurate compared with a case of using a temperature measurement manner of attaching thermocouples.

In the preferred implementation shown in FIG. 4, the conductive trajectory 35 is configured to be in a spiral shape that surrounds the infrared emitter 30 and extends along the axial direction of the infrared emitter 30. And, an extending length in the axial direction of the infrared emitter 30 fully covers the infrared emission coating 32, so that the conductive trajectory 35 can detect the temperature of more regions or parts of the infrared emitter 30.

In other optional implementations, the conductive trajectory 35 is a patterned conductive trajectory 35 formed in shape by digital printing, printing, etching, electroplating, or the like. In other variation implementations, the patterned conductive trajectory 35 may be in a winding and bending shape extending along the axial direction of the infrared emitter 30.

Certainly, in the foregoing implementations, the conductive trajectory 35 and the infrared emission coating 32 on the surface of the infrared emitter 30 are insulated from each other to prevent interference in measuring the resistance of the conductive trajectory 35. Specifically, the implementations may be achieved by arranging an insulation layer (not shown in the figure) between the conductive trajectory 35 and the infrared emission coating 32. For example, a relatively thin insulating protective layer such as glass or glaze is deposited or sprayed on the surface of the infrared emission coating 32 during preparation, and then the conductive trajectory 35 is formed.

In another optional implementation, the conductive trajectory 35 is formed on an inner surface of the infrared emitter 30 surrounding the cavity 310, that is, the conductive trajectory 35 and the infrared emission coating 32 are respectively on two sides of the base body 31 along a radial direction of the base body 31. The conductive trajectory 35 is formed inside the infrared emitter 30.

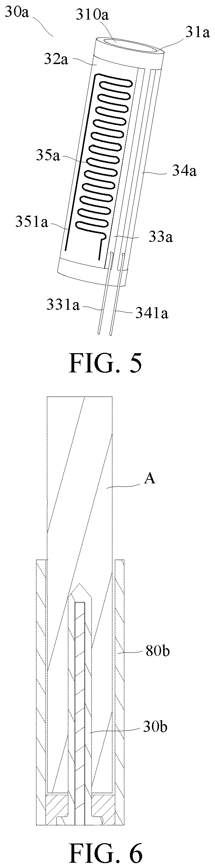

In another optional embodiment shown in FIG. 5, the infrared emitter 30a includes a tubular base body 31a, and an electrothermal infrared emission film 32a wrapped or wound on an outer surface of the tubular base body 31a. The material of the electrothermal infrared emission film 32a may be, for example, a zinc oxide film, a graphene film, or an indium oxide film doped with rare earth metals that can radiate an infrared ray at a certain temperature, or may be a composite film in which an infrared emission material is formed on a flexible film substrate such as polyimide, ceramic paper, or flexible glass. The thickness of the materials is usually about 30 to 500 nm.

A conductive trajectory 35a for sensing the temperature is formed on the surface of the infrared emission film 32a through printing or deposition. In the embodiment shown in FIG. 5, the conductive trajectory 35a is in a winding and bending shape extending along the axial direction of the infrared emitter 30a, and substantially covers the infrared emitter 30a for a relatively high length in the axial direction. Meanwhile, an electrical connection portion 351a is also printed on both ends of the conductive trajectory 35a. In an optional implementation, the electrical connection portion 351a is prepared by a material having a low resistance-temperature coefficient, such as copper, gold, silver, and the like.

In an optional implementation, the conductive trajectory 35/35a may have a thickness of about 10 to 30 microns.

Further, as shown in FIG. 5, in order to facilitate power supply to the infrared emission film 32a, a first conductive coating 33a and a second conductive coating 34a extending along the axial direction and used as electrodes are formed on both sides of the infrared emission film 23. The material may be a metal or alloy with low resistivity, such as silver, gold, palladium, platinum, copper, nickel, molybdenum, tungsten, niobium or the foregoing metal alloy material. In a specific implementation, a method of forming the first conductive coating 33a and the second conductive coating 34a on the surface of the infrared emission film 32a can be that a powder of the metal alloy material is mixed with an organic solvent or auxiliary agent to prepare a slurry, then the surface of the infrared emission film 32a is printed or coated through printing or coating, and then is cured, to obtain the first conductive coating 33a and the second conductive coating 34a. Certainly, in order to facilitate connection of the first conductive coating 33a and the second conductive coating 34a to the power source, the infrared emitter 30a further includes a first conductive pin 331a and a second conductive pin 341a formed through welding or the like.

Further, in the implementation shown in FIG. 5, the conductive trajectory 35a for detecting the temperature of the infrared emitter 30a is formed on the infrared emission film 32a. In preparation, the conductive trajectory 35a may be printed or deposited after the infrared emission film 32a is flattened, and then the infrared emission film 32a may be wrapped on a surface of the base body 31a.

Alternatively, in another variation implementation, the infrared emitter 30a is formed by printing or depositing the conductive trajectory 35a on the outer surface of the base body 31a and then winding or wrapping the infrared emission film 32a.

In other variation implementations, a plurality of infrared emission coatings 32 or infrared emission films 32a arranged side by side in sequence along the axial direction are formed on the infrared emitter 30/30a, the plurality of infrared emission coatings 32 or infrared emission films 32a can be independently controlled, so as to respectively heat different parts of the inhalable material A along the length direction.

FIG. 6 shows a schematic diagram of an aerosol generation device according to another variation embodiment of this application. The aerosol generation device includes a tubular element 80b, and at least a part of the tubular element 80b is internally hollow and is configured as a cavity for receiving and heating an inhalable material A.

An infrared emitter 30b is in a pin shape extending along an axial center of the tubular element 80b, so that when the inhalable material A is received in the cavity, the infrared emitter 30b is inserted into the inhalable material A and emits the infrared ray for heating the inhalable material A.

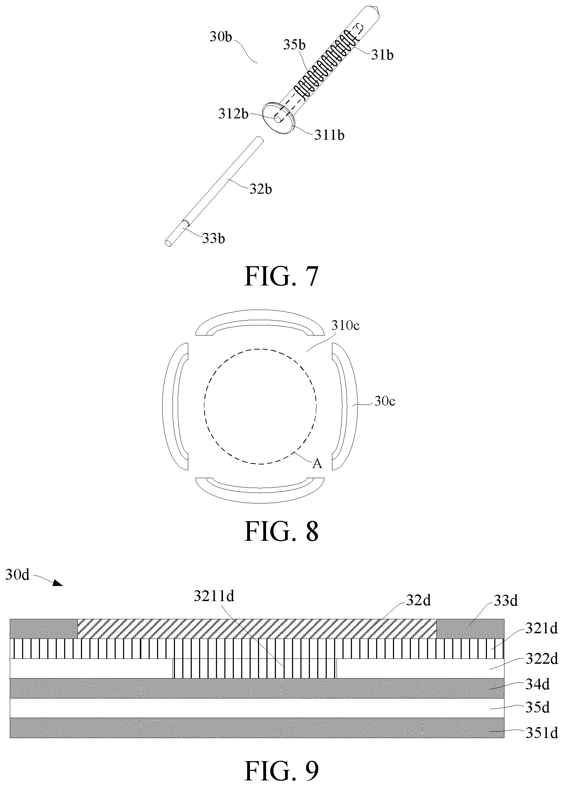

The specific configuration of the infrared emitter 30b may be shown in FIG. 7, including:
a base body 31b, prepared by a material that is rigid and can transmit an infrared ray, such as quartz, glass, or ceramic, and configured to be set into a pin shape for insertion into the inhalable material A.

Certainly, for ease of installation and fixation of the infrared emitter 30b, a base portion 311b is arranged on the base body 31b. The base body 31b is internally provided with a middle hole 312b which is for receiving purpose and which extends along the axial direction.

An infrared emission coating 32b formed through spraying or the like outside an elongated rod-shaped substrate 33b, or an infrared emission film 32b wrapped or wound on the elongated rod-shaped substrate 33b may be encapsulated or accommodated in the base body 31b through the middle hole 312b, and may generate heat and radiate the infrared ray.

Based on temperature monitoring, a conductive trajectory 35b with a positive or negative resistance-temperature coefficient and for sensing the temperature of the infrared emitter 30b resistance-temperature coefficient is similarly formed on an outer surface of the base body 31b by printing, depositing, or the like.

FIG. 8 shows an aerosol generation device according to another embodiment. The aerosol generation device includes a plurality of discrete infrared emitters 30c. The plurality of infrared emitters 30c may be in a flat sheet shape or may be an arcuate sheet shape as shown in FIG. 8, and are arranged around a cavity 320c receiving the inhalable material A. Each of the discrete infrared emitters 30c can be independently controlled and independently radiate the infrared ray to different regions of the inhalable material A, so as to respectively heat different regions of the inhalable material A received in the cavity 320c. Certainly, the conductive trajectory 35/35a/35b can be disposed on the infrared emitter 30c by printing, deposition, or the like, so as to monitor the temperature of the infrared emitter 30c.

FIG. 9 is a schematic structural diagram of an infrared emitter 30d according to another embodiment. In this embodiment, the infrared emitter 30d may be a coating or a flexible film combined or wound on a quartz glass tube. Specifically, the infrared emitter 30d has a composite hierarchical structure formed by a plurality of functional layers, including the following layers:
An infrared emission layer 32d, which radiates an infrared ray after being heated in a manner of thermal infrared emission in this embodiment, and the material of which may be TiO2, ZrO2, or the like.

An electrothermal layer 321d, in which a resistor generates heat and transfers the heat to the infrared emission layer 32d and causes the infrared emission layer 32d to radiate the infrared ray at the time of power supply; and the material of which may be stainless steel, nickel-chromium alloy, iron-chromium-aluminum alloy, or the like, or may be a metal material whose resistivity increases rapidly the with temperature, such as Ni70Fe30 alloy, or the like.

Alternatively, in other variation implementations, the infrared emission layer 32d electrically emits the infrared ray, so that the infrared emitter 30d may not need the electrothermal layer 321d.

A first electrode layer 33d and a second electrode layer 34d, which are respectively formed on both sides of the electrothermal layer 321d to supply power for the electrothermal layer 321d. Highly conductive and oxidation-resistant materials, such as Ag, Ni, and the like are selected and used as the materials of the first electrode layer 33d and the second electrode layer 34d.

In design, the first electrode layer 33d is in the same layer as the infrared emission layer 32d and at least a part of the first electrode layer 33d surrounds the infrared emission layer 32d. Apart 3211d of the electrothermal layer 321d toward the second electrode layer 34d protrudes, so as to come into contact with the second electrode layer 34d.

An insulation layer 322d is further disposed between the second electrode layer 34d and the electrothermal layer 321d, which is made of an insulating material, preferably a flexible insulating material, such as polyimide. In addition, the insulation layer 322d surrounds the protruding part 3211d of the electrothermal layer 321d toward the second electrode layer 34d in shape.

In the foregoing implementations, the insulation layer 322d is provided such that the second electrode layer 34d is electrically connected only to the protruding part 3211d of the electrothermal layer 321d; and the positions of the first electrode layer 33d distributed on both sides of the electrothermal layer 321d along a width direction shown in the figure are staggered from the position of the protruding part 3211d. In this way, when the electrothermal layer 321d is powered through the first electrode layer 33d and the second electrode layer 34d, the current can substantially completely flow through the entire electrothermal layer 321d to uniformly heat the entire electrothermal layer 321d.

Alternatively, in other variation implementations, the first electrode layer 33d is disposed close to a left end along the width direction of the electrothermal layer 321d in the figure, while the second electrode layer 34d is disposed close to a right end along the width direction of the electrothermal layer 321d in the figure. Certainly, the first electrode layer 33d and the second electrode layer 34d are respectively located on both sides of the electrothermal layer 321d along the thickness direction in the figure, so that the current can substantially completely flow through the entire electrothermal layer 321d along the width direction to uniformly heat the entire electrothermal layer 321d.

A thermistor layer 35d, which can receive heat transmitted by the electrothermal layer 321d through the second electrode layer 34d to cause a resistance change of the thermistor layer 35d, thereby facilitating the determination of the temperature of the electrothermal layer 321d through detection of a resistance value.

In a preferred implementation, the thermistor layer 35d is a ceramic PTC film, which can be made very thin by using a film technology (for example, PVD). In this way, a resistance value of the ceramic PTC can be very low (for example, less than 0.1 Ohm), thereby achieving a purpose of accurate temperature control. For some specific materials, the thermistor layer 35d is a material in which the resistivity increases suddenly, such as barium titanate (BaTiO₃), lead titanate (PbTiO₃), sodium bismuth titanate (Bi_{0.5}Na_{0.5}TiO₃), and the like.

A third electrode layer 351d, where the third electrode layer 351d and the second electrode layer 34d are respectively used as a positive end and a negative end of the thermistor layer 35d to detect a resistance of the thermistor layer 35d.

During use of the infrared emitter 30d, the first electrode layer 33d, the second electrode layer 34d, and the third electrode layer 351d can be separately soldered with a conductive pin or an electrical terminal, so as to facilitate a subsequent connection to a PCB board or a circuit board.

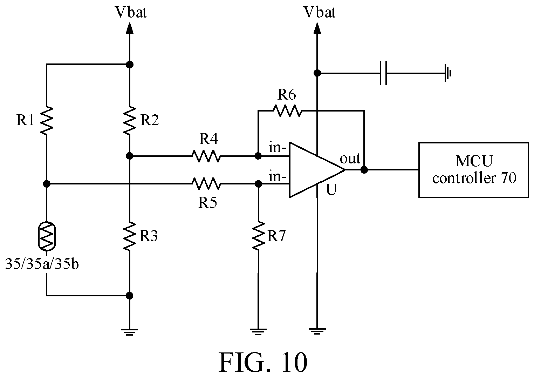

Meanwhile, based on the temperature detection cooperating with the infrared emitter 30, a corresponding temperature detection circuit of the aerosol generation device is shown in FIG. 10, including:
a voltage divider resistor R1, which is a standard resistor having a standard resistance value, and forms a voltage divider circuit with the conductive trajectory 35/35a/35b or the thermistor layer 35d to calculate a resistance of the conductive trajectory 35/35a/35b or the thermistor layer 35d; and
a trans-operational amplifier U, in which a signal input end in+ acquires voltages at both ends of the conductive trajectory 35/35a/35b or the thermistor layer 35d, a reference signal input end in- inputs a reference voltage, and an output end out outputs a result signal of the temperature correlated with the resistance of the conductive trajectory 35/35a/35b or the thermistor layer 35d to an MCU controller 70; and resistors R2 to R7, performing regular voltage division and current limitation on each current path, so that each electronic element can obtain a required specific working voltage and normal working current, to ensure a normal working state.

Then, the MCU controller 70 controls the power of the infrared emitter 30 according to the result and keeps the temperature of the inhalable material A consistent with a preset target temperature.

It should be noted that, the specification of this application and the accompanying drawings thereof illustrate preferred embodiments of this application, but this application is not limited to the embodiments described in the specification. Further, a person of ordinary skill in the art may make improvements or variations according to the foregoing descriptions, and such improvements and variations shall all fall within the protection scope of the appended claims of this application.

## Claims

1. An aerosol generation device, configured to heat an inhalable material to generate an aerosol for inhalation, comprising: a housing, wherein the housing is internally provided with:
a cavity, configured to receive an inhalable material;
an infrared emitter, comprising an infrared emission material, wherein the infrared emission material is configured to radiate an infrared ray to the inhalable material received in the cavity, so as to heat the inhalable material;
a temperature sensing material, formed on the infrared emitter and insulated from the infrared emission material, wherein the temperature sensing material has a positive or negative resistance-temperature coefficient; and
a circuit, configured to obtain a resistance value of the temperature sensing material and determine a temperature of the infrared emitter from the resistance value.

2. The aerosol generation device according to claim 1, wherein the temperature sensing material comprises a conductive trajectory or a thermistor coating formed on the infrared emitter.

3. The aerosol generation device according to claim 1 or 2, wherein the infrared emitter is configured to extend along an axial direction of the cavity and surround at least a part of the cavity.

4. The aerosol generation device according to claim 3, wherein the infrared emitter further comprises:
a base body, extending along the axial direction of the cavity and surrounding the cavity; and
the infrared emission material is arranged to be a coating formed on the base body or a film wrapped or wound on the tubular base body.

5. The aerosol generation device according to claim 4, wherein at least a part of a length of the temperature sensing material extending along the axial direction of the cavity covers a length of the infrared emission material extending along the axial direction of the cavity.

6. The aerosol generation device according to claim 1 or 2, wherein the infrared emitter is configured in a shape of pin extending along an axial direction of the cavity, and is inserted into the inhalable material when the inhalable material is received in the cavity.

7. The aerosol generation device according to claim 6, wherein the infrared emitter comprises:
a base body, configured to be in a pin shape at least a part of which extends along the axial direction of the cavity, wherein the base body is provided with a hollow extending along the axial direction inside; and
a substrate, accommodated in the hollow; and
the infrared emission material is arranged to be a coating formed on a surface of the substrate or a film wrapped on the substrate.

8. The aerosol generation device according to claim 7, wherein the temperature sensing material is formed on a surface of the base body.

9. The aerosol generation device according to claim 2, wherein the conductive trajectory is configured in a winding, bending, or spiral shape extending along a length direction of the infrared emitter.

10. The aerosol generation device according to claim 2, wherein the infrared emitter comprises:
an electrothermal layer, comprising a first side and a second side facing away from each other along a thickness direction;
the infrared emission material is positioned on the first side of the electrothermal layer and configured to radiate an infrared ray to the inhalable material received by the cavity when heated by the electrothermal layer; and
the thermistor coating is positioned on the second side of the electrothermal layer.

11. The aerosol generation device according to claim 10, wherein the infrared emitter further comprises:
a first electrode layer, positioned on a first side of the electrothermal layer and electrically conductive with the electrothermal layer;
a second electrode layer, positioned between the electrothermal layer and the thermistor coating and electrically conductive with both the electrothermal layer and the thermistor coating; and
a third electrode layer, positioned on a side of the thermistor coating away from the electrothermal layer and electrically conductive with the thermistor coating.

12. The aerosol generation device according to claim 11, wherein the first electrode layer and the second electrode layer are staggered from each other along a thickness direction of the electrothermal layer.

13. An infrared emitter for an aerosol generation device, comprising:
an infrared emission material, configured to radiate an infrared ray to an inhalable material to heat the inhalable material; and
a temperature sensing material, insulated from the infrared emission material and having a positive or negative resistance-temperature coefficient, so that a temperature of the infrared emitter is capable of being determined from a resistance value of the conductive trajectory or thermistor coating by measuring the resistance value.
